# EUROPEAN PATENT APPLICATION

(11) **EP 4 691 813 A1**
(43) Date of publication of application: **11.02.2026**
(21) Application number: 23929824.3
(22) Date of filing: 13.09.2023
(51) Int. Cl.: B60G 17/052, B60N 2/52

(54) **INTEGRATED ADJUSTMENT SYSTEM AND VEHICLE**

(30) Priority: 31.03.2023 CN 202310387320; 11.07.2023 CN 202310851417
(71) Applicant: BYD Company Limited, Shenzhen, Guangdong 518118 (CN)
(72) Inventor: LIAN, Yubo, Shenzhen, Guangdong 518118 (CN); LIAO, Yinsheng, Shenzhen, Guangdong 518118 (CN); ZHANG, Hongzhou, Shenzhen, Guangdong 518118 (CN); GUAN, Zhuohui, Shenzhen, Guangdong 518118 (CN); ZHANG, Feng, Shenzhen, Guangdong 518118 (CN)
(74) Representative: Mathys & Squire
(86) International application number: PCT/CN2023/118595
(87) International publication number: WO 2024/198250

(57) **Abstract**

An integrated adjustment system, applied to a vehicle, and including a first air receiving apparatus and a second air receiving apparatus, the first air receiving apparatus being configured to implement a first function, the second air receiving apparatus being configured to implement a second function, and the first function being different from the second function; and an air supply apparatus, the air supply apparatus being connected to the first air receiving apparatus to supply air to the first air receiving apparatus, and the air supply apparatus being connected to the second air receiving apparatus to supply air to the second air receiving apparatus. The first air receiving apparatus and the second air receiving apparatus share one air supply apparatus, which significantly reduces a total size of the integrated adjustment system, saves an interior space of the vehicle, and reduces costs of the vehicle. Also provided is a vehicle including the integrated adjustment system.

## Description

### CROSS-REFERENCE TO RELATED APPLICATIONS

This application claims priority to Chinese patent application No. 202310387320.6, filed by BYD Company Limited on March 31, 2023 and entitled "INTEGRATED ADJUSTMENT SYSTEM AND VEHICLE", and Chinese patent application No.202310851417.8, filed by BYD Company Limited on July 11, 2023 and entitled "INTEGRATED ADJUSTMENT SYSTEM AND VEHICLE".

### TECHNICAL FIELD

This application relates to the technical field of vehicle adjustment, and in particular, to an integrated adjustment system and a vehicle.

### BACKGROUND

In related technologies, a seat of a vehicle can be adjusted in horizontal position and height to accommodate different passengers. The height of a suspension system of the vehicle is adjusted by configuring an air suspension. However, a seat adjustment system and an air suspension have complex structures and occupy a large interior space of a vehicle.

### SUMMARY

This application is intended to solve one of the technical problems in related technologies at least to some extent.

To this end, this application provides an integrated adjustment system.

According to a first aspect of this application, there is provided an integrated adjustment system, applied to a vehicle. The system includes: a first air receiving apparatus and a second air receiving apparatus, the first air receiving apparatus being configured to implement a first function, the second air receiving apparatus being configured to implement a second function, and the first function being different from the second function; and an air supply apparatus, the air supply apparatus being connected to the first air receiving apparatus to supply air to the first air receiving apparatus, and the air supply apparatus being connected to the second air receiving apparatus to supply air to the second air receiving apparatus.

According to a second aspect of this application, an integrated adjustment system is provided. The system includes a suspension apparatus, a seat adjustment apparatus, and an air supply apparatus. The air supply apparatus is connected to the suspension apparatus to supply air to the suspension apparatus, and the air supply apparatus is connected to the seat adjustment apparatus to supply air to the seat adjustment apparatus.

According to a third aspect of this application, a vehicle is provided. The vehicle includes the foregoing integrated adjustment system.

According to a fourth aspect of this application, a vehicle is provided. The vehicle includes the foregoing integrated adjustment system. The second pipeline is provided with a first pressure-limiting valve, the seat adjustment apparatus including an airbag, the airbag being located at a side rear position of the seat, the airbag being connected to the second pipeline, the second pipeline being provided with a first valve and a second valve, the first valve being configured to control air intake of the airbag, and the second valve being configured to control air exhaust of the airbag. The first pressure-limiting valve and the first valve are configured to be opened upon obtaining a signal that the vehicle is turning, to inflate the airbag at the side rear position on a tilted side.

A technical effect of this application is that the first air receiving apparatus and the second air receiving apparatus share one air supply apparatus, which significantly reduces the total size of the integrated adjustment system, saves an interior space of the vehicle and reduces costs of the vehicle.

Additional aspects and advantages of this application are set forth in part in the following description, and in part become apparent from the following description, or may be learned through the practice of this application.

### DESCRIPTION OF DRAWINGS

FIG. 1 is a diagram of an integrated adjustment system according to an embodiment of this application.
FIG. 2 is a diagram of another integrated adjustment system according to an embodiment of this application.

### DESCRIPTION OF EMBODIMENTS

Embodiments of this application are described in detail below, examples of which are shown in the accompanying drawings, where same or similar reference numerals throughout represent same or similar elements or elements having same or similar functions. The embodiments described below with reference to the accompanying drawings are exemplary and are intended to explain this application, and shall not be construed as a limitation on this application.

In the descriptions of this application, it will be understood that orientations or positional relationships indicated by the terms "center", "longitudinal", "transverse", "length", "width", "upper", "lower", "front", "rear", "left", "right", "vertical", "horizontal", "top", "bottom", "inner", "outer", "circumferential", and the like are orientations or positional relationships as shown in the drawings, and are only for the purpose of facilitating and simplifying the descriptions of this application instead of indicating or implying that apparatuses or elements indicated must have particular orientations, and be constructed and operated in the particular orientations, so that these terms are not construed as limiting this application.

In this application, unless otherwise expressly specified and limited, the terms "mount", "join", "connect", " fasten", and the like will be understood in a broad sense, such as, a fastened connection, a detachable connection, or an integral connection; a mechanical connection, or an electrical connection; and a direct connection, an indirect connection through an intermediate medium, an internal connection of two elements, or interaction between two elements. For those of ordinary skill in the art, the specific meanings of the foregoing terms in this application can be understood according to specific situations.

According to an embodiment of this application, there is provided an integrated adjustment system, applied to a vehicle. The system includes: a first air receiving apparatus and a second air receiving apparatus, wherein the first air receiving apparatus is configured to implement a first function, the second air receiving apparatus is configured to implement a second function, and the first function is different from the second function; and an air supply apparatus, wherein the air supply apparatus is connected to the first air receiving apparatus to supply air to the first air receiving apparatus, and the air supply apparatus is connected to the second air receiving apparatus to supply air to the second air receiving apparatus.

The air supply apparatus is configured to supply air. The air may be, for example, nitrogen, compressed air, inert air, or the like. The first air receiving apparatus and the second air receiving apparatus are apparatuses to receive air. The first air receiving apparatus utilizes air to implement a first function. The second air receiving apparatus utilizes air to implement a second function. The first function and the second function are, for example, vehicle height adjustment, seat position adjustment, honking, valve control.

In this example, the first air receiving apparatus and the second air receiving apparatus share one air supply apparatus, which significantly reduces a total size of the integrated adjustment system, saves interior space of the vehicle, and reduces costs of the vehicle.

In one example, a third air receiving apparatus is further included, wherein the air supply apparatus is connected to the third air receiving apparatus to supply air to the third air receiving apparatus. The third air receiving apparatus is configured to implement a third function. The third function is different from the first function and the second function.

In this example, the air supply apparatus supplies air to the first air receiving apparatus, the second air receiving apparatus, and the third air receiving apparatus, thereby reducing the size of the integrated adjustment system.

In one example, the first air receiving apparatus, the second air receiving apparatus, and/or the third air receiving apparatus are components of a vehicle. For example, the foregoing air receiving apparatus is a component for implementing the raising and lowering a vehicle body, a component for implementing tire inflation, a component for implementing honking, a component for implementing seat adjustment, or a component for implementing steering, or the like.

In one example, the first air receiving apparatus is one or more of a suspension apparatus, a seat adjustment apparatus, and a tire inflation apparatus;
the second air receiving apparatus is one or more of a suspension apparatus, a seat adjustment apparatus, and a tire inflation apparatus; and
the third air receiving apparatus is one or more of a suspension apparatus, a seat adjustment apparatus, and a tire inflation apparatus.

In this example, the air supply apparatus can supply air to at least one of the suspension apparatus, the seat adjustment apparatus, and the tire inflation apparatus. It will be appreciated that, the first air receiving apparatus, the second air receiving apparatus, and the third air receiving apparatus are not limited to the foregoing embodiments, and may alternatively be other apparatuses of the vehicle that require air, and those skilled in the art may configure them according to actual needs.

The seat adjustment apparatus is configured to adjust a side of a seat to adjust a posture of a passenger when the vehicle is turning, reducing passenger tilt and improving the driving experience. The suspension apparatus is configured to adjust a height of the vehicle body according to road conditions, to ensure passability of the vehicle, reduce wind resistance of the vehicle, and the like.

In this application, the air supply apparatus is configured to supply high-pressure air to the seat adjustment apparatus and the suspension apparatus for use. An air pressure is set according to actual needs.

It will be appreciated that, those skilled in the art may configure the air supply apparatus according to actual needs, which are not limited to the foregoing embodiments.

The seat adjustment apparatus and the suspension apparatus both provide support forces through high-pressure air to adjust the seat and the vehicle body separately.

The seat adjustment apparatus includes an airbag. The airbag abuts against the seat, for example, a side of the seat. After being inflated, the airbag expands in size and squeezes the seat, thereby changing a shape of the seat. After being deflated, the airbag shrinks in size and no longer squeezes the seat, so that the seat resumes an initial state.

The suspension apparatus includes an air spring 6. As an air pressure increases, the air spring 6 expands in size to provide a force to lift the vehicle body, thereby increasing a height of the vehicle body. As the air pressure decreases, the height of the vehicle body gradually decreases.

In conventional technologies, to supply air to the airbag, it is usually necessary to dispose an air compressor 4 separately. The air compressor 4 is connected to the airbag. To supply air to the air spring 6, it is usually necessary to dispose an air compressor 4 separately, and the air compressor 4 is connected to the air spring 6. Alternatively, an air compressor 4 and an air storage tank are separately disposed, the air compressor 4 supplies air to the air storage tank, and the air storage tank supplies high-pressure air to the air spring 6. Due to arrangement of two air compressors 4 and two air storage tanks, sizes of the two systems are greatly increased, and an interior space of the vehicle is occupied.

A tire inflation apparatus is configured to inflate a tire of the vehicle. For example, the tire inflation apparatus includes an inflation pipeline and a wheel side valve, and the inflation pipeline is connected to the wheel side valve. The inflation pipeline is connected to the air supply apparatus. The wheel side valve is configured to control an air vent of the tire to be opened or closed.

Under the condition that one of the first air receiving apparatus and the second air receiving apparatus is a seat adjustment apparatus and the other is a suspension apparatus, the seat adjustment apparatus and the suspension apparatus share one air supply apparatus, which significantly reduces the total size of the integrated adjustment system, saves the interior space of the vehicle, and reduces costs of the vehicle.

In addition, a use frequency of the suspension apparatus is much lower than that of the seat adjustment apparatus. The integrated adjustment apparatus can ensure a high use frequency of the air supply apparatus, thereby avoiding idle losses of the air supply apparatus due to long-term non-use.

In addition, the suspension apparatus usually adjusts the height of the vehicle body when the vehicle is stationary, or adjusts the height of the vehicle body along the change of a vehicle speed when the vehicle is traveling in a straight line. The seat adjustment apparatus is usually used when the vehicle is turning. Therefore, functions of the suspension apparatus and the seat adjustment apparatus do not overlap in use time, so that the air supply apparatus can be used to the maximum extent.

In addition, because work of the suspension apparatus and work of the seat adjustment apparatus are both related to a motion state of the vehicle, for the suspension apparatus and the seat adjustment apparatus, coordinated control of a plurality of functional modules (such as a plurality of solenoid valves, or pressure sensors) may be implemented through one control apparatus, so that resources of the control apparatus can be better scheduled and control strategies can be better coordinated.

In addition, for the suspension apparatus and the seat adjustment apparatus, because both apparatuses are triggered and controlled based on a position state of the vehicle and an acceleration state of the vehicle, a vehicle signal only needs to be sent once instead of a plurality of times, which saves computing resources of the control apparatus of the entire vehicle and improves operating efficiency of the system of the entire vehicle.

In addition, because two systems can be controlled by one control apparatus, for example, functions of the seat adjustment apparatus may be integrated into a control apparatus of the suspension apparatus, there is no need to equip two separate control apparatuses, which can save costs of the vehicle.

In one example, in a first state, the air supply apparatus is configured to supply air to the first air receiving apparatus;
in a second state, the air supply apparatus is configured to supply air to the second air receiving apparatus;
in a third state, the air supply apparatus is configured to supply air to the third air receiving apparatus;
in a fourth state, the air supply apparatus is configured to supply air to the first air receiving apparatus and the second air receiving apparatus;
in a fifth state, the air supply apparatus is configured to supply air to the third air receiving apparatus and the second air receiving apparatus;
in a sixth state, the air supply apparatus is configured to supply air to the third air receiving apparatus and the first air receiving apparatus; or
in a seventh state, the air supply apparatus is configured to supply air to the first air receiving apparatus, the second air receiving apparatus, and the third air receiving apparatus.

In this example, by controlling different operating states, for example, by controlling the operating state through the control apparatus, a plurality of air supply modes of the air supply apparatus can be implemented.

In one example, the air supply apparatus includes an air generation unit and a first air storage unit. The air generation unit is configured to supply air to the first air storage unit, so that the first air storage unit supply air to the first air receiving apparatus and/or the second air receiving apparatus.

For example, the air generation unit is an air compressor 4. It will be appreciated that, it may alternatively be a nitrogen compressor, an inert air compressor, or the like. The first air storage unit is configured to store air. For example, the first air storage unit is an air storage tank. In this example, the first air storage unit can store air to supply air to the first air receiving apparatus and/or the second air receiving apparatus. In this way, the first air storage unit can store air at a specified pressure. Compared with the air generation unit, the first air storage unit can continuously provide a large amount of air. When air supply is intermittent, the air generation unit is prevented from being frequently turned on and off.

In one example, the integrated adjustment system includes an air generation unit, a first air storage unit, and a second air storage unit. The air generation unit is configured to supply air to the first air storage unit. The air generation unit or the first air storage unit is configured to supply air to the second air storage unit.

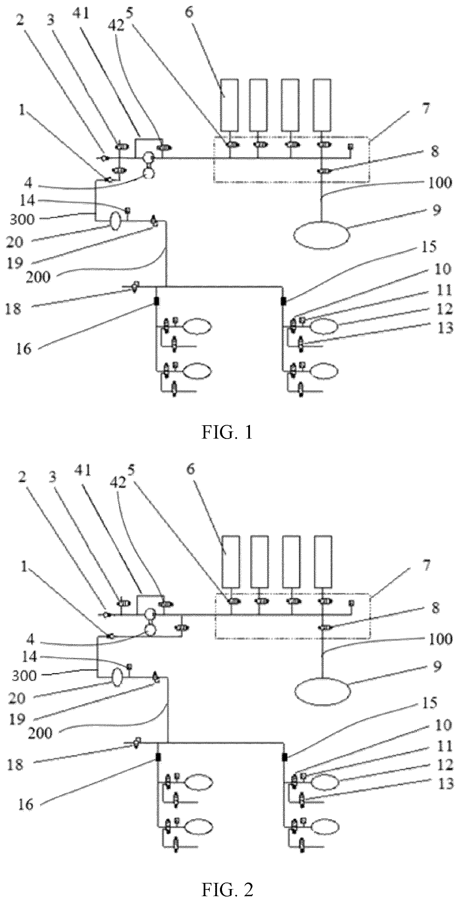

As shown in FIG. 1 and FIG. 2, the air generation unit is an air compressor 4. The first air storage unit 9 and the second air storage unit 20 are both air storage tanks. Under normal circumstances, a volume of the first air storage unit 9 is greater than that of the second air storage unit 20. An air pressure of the first air storage unit 9 is greater than that of the second air storage unit 20. When the air pressure of the first air storage unit 9 is less than a specified value, the air generation apparatus is started to supply air to the first air storage apparatus.

When the air pressure of the second air storage unit 20 is less than a specified value, the air generation apparatus may be started to supply air to the second air storage unit 20, as shown in FIG. 1. Alternatively, the first air storage unit 9 is opened to supply air to the second air storage unit 20, as shown in FIG. 2.

In this example, because the air pressure of the second air storage unit 20 is lower than that of the first air storage unit 9, the first air storage unit 9 may also supply air to the second air storage unit 20. Compared with the manner in which the air compressor 4 supplies air to the second air storage unit 20, due to the large volume of the first air storage unit 9, air can be supplied to the second air storage unit 20 in time, avoiding the problem that the air generation unit is frequently turned on and off, and sufficient air cannot be supplied in a short time. It will be noted that in the examples shown in FIG. 1 and FIG. 2, a first pipeline 100 includes a pipeline connecting the air compressor 4 and the suspension apparatus and a pipeline connecting the first air storage unit 9 and the suspension apparatus.

In other examples, the air generation unit may be, but is not limited to, an air compressor 4, a nitrogen compressor, an inert air compressor, an air storage unit, or the like. The air generation unit may alternatively be a nitrogen generator. The nitrogen generator is configured to prepare nitrogen. The air generation unit may further include a nitrogen generator and a nitrogen compressor. The nitrogen compressor is configured to pressurize nitrogen prepared by the nitrogen generator and supply the pressurized nitrogen to the seat adjustment apparatus or suspension apparatus.

In one implementation, as shown in FIG. 1, the first air receiving apparatus is a suspension apparatus. The second air receiving apparatus is a seat adjustment apparatus. The air supply apparatus supplies air to the first air receiving apparatus through the first pipeline 100. The air supply apparatus supplies air to the second air receiving apparatus through a second pipeline 200. A distribution valve is disposed between the first air storage unit and the suspension apparatus.

The distribution valve 7 is configured to control the suspension apparatus and the first air storage unit 9 to be opened or closed. For example, the suspension apparatus includes a plurality of air springs 6, such as four air springs. The distribution valve 7 includes four air spring solenoid valves 5 corresponding to the air springs 6, and an air storage unit solenoid valve 8 corresponding to the first air storage unit 9. During lifting of the vehicle body, the air spring solenoid valves 5 and the air storage unit solenoid valve 8 are opened, and high-pressure air in the first air storage unit 9 enters the four air springs 6, thereby increasing a height of the vehicle body. When the vehicle body needs to be lowered, the air storage unit solenoid valve 8 is closed, to exhaust the air in the air springs 6 to the outside of a vehicle cabin. The vehicle cabin is, for example, a driver's compartment, or a luggage compartment.

In one example, a pressure-limiting valve set is disposed between the second air storage unit 20 and the seat adjustment apparatus. The pressure-limiting valve set is disposed on the second pipeline 200. The pressure-limiting valve set can control an air pressure of the second pipeline 200 located downstream of the pressure-limiting valve set to meet working requirements of the seat adjustment apparatus.

In one example, as shown in FIG. 1, the pressure-limiting valve set includes a first pressure-limiting valve 19 and a second pressure-limiting valve 18. The first pressure-limiting valve 19 is disposed on the second pipeline 200. The second pipeline 200 includes an exhaust branch. The second pressure-limiting valve 18 is disposed on the exhaust branch.

In this example, an air pressure of the second air storage unit 20 is higher that a working pressure of the seat adjustment apparatus. To match the working pressure of the seat adjustment apparatus, the first pressure-limiting valve 19 is disposed on the second pipeline 200. Those skilled in the art may choose a specification of the first pressure-limiting valve 19 according to the air pressure of the second air storage unit 20 and the working pressure of the seat adjustment apparatus. The exhaust branch is configured to exhaust air in the second pipeline 200. For example, the second pressure-limiting valve 18 is a solenoid valve or a pneumatic valve. During air exhaust of the second pipeline 200, the second pressure-limiting valve 18 is opened, so that air in the airbag can be quickly exhausted. A manner of disposing the second pressure-limiting valve 18 on the second pipeline 200 for exhausting air can enable quicker air exhaust.

In addition, due to the arrangement of the exhaust branch and the second pressure-limiting valve 18, when the first pressure-limiting valve 19 is invalid, high-pressure air can be depressurized through the second pressure-limiting valve 18 to prevent the seat adjustment apparatus from being damaged by an excessive air pressure.

In one example, the second pipeline 200 is provided with an air pressure adjustment valve set. The air pressure adjustment valve set is configured to adjust an air pressure of the seat adjustment apparatus. The seat adjustment apparatus includes an airbag. Inflation, air exhaust and air pressure maintenance of the airbag are controlled by the air pressure adjustment valve set.

In one example, the air pressure adjustment valve set includes a first valve and a second valve. The first valve has a first end, a second end and a third end. The first end is connected to the air supply apparatus. The second end is connected to the seat adjustment apparatus. The third end is connected to a first exhaust pipeline. The second valve is disposed on the first exhaust pipeline to control the first exhaust pipeline to be opened or closed. The first end, the second end, and the third end are in selective communication in pairs.

The first valve and the second valve may be solenoid valves, pneumatic valves, or the like. As shown in FIG. 1, the first valve is an air intake solenoid valve 10, and the second valve is an exhaust solenoid valve 13. The seat adjustment apparatus includes a driver's seat adjustment mechanism and a passenger's seat adjustment mechanism. The second pipeline 200 is provided with a driver's seat control valve 15 and a passenger's seat control valve 16 to respectively control air paths of the driver's seat adjustment mechanism and the passenger's seat adjustment mechanism. It will be appreciated that, the driver's seat control valve 15 and the passenger's seat control valve 16 may not be provided to simplify the seat adjustment apparatus.

Both the driver's seat adjustment mechanism and the passenger's seat adjustment mechanism include airbags. For example, the airbag includes a left side airbag 12 corresponding to a position of a left side of the seat and a right side airbag corresponding to a position of a right side of the seat. The left side airbag 12 and the right side airbag respectively adjust angles, heights, and the like of the left side and the right side of the seat, thereby reducing the passenger's body tilt.

The left side airbag 12 of the driver's seat adjustment mechanism is used as an example for description. When the vehicle turns right, the passenger tilts to the left. In this case, the driver's seat control valve 15 and the air intake solenoid valve 10 are opened, and the exhaust solenoid valve 13 is closed. High-pressure air in the second air storage unit 20 passes through the first pressure-limiting valve 19, the driver's seat control valve 15, and the air intake solenoid valve 10 to reach the left side airbag 12. The left side airbag 12 expands after being inflated, thereby changing the angle of the left side to support the passenger and reduce the leftward title of the passenger. When an air pressure of the left side airbag 12 reaches a specified value, the air intake solenoid valve 10 is closed, and the air pressure of the left side airbag 12 is maintained. When the vehicle changes to straight-line driving, a driver resumes an upright sitting posture. In this case, the exhaust solenoid valve 13 is opened to exhaust air in the left side airbag 12, the left side airbag 12 shrinks in size, and the left side resumes an initial state.

In this example, this structure of the first valve can simplify a connection manner of the second valve, which is convenient for assembly and disassembly of the seat adjustment apparatus.

In one example, as shown in FIG. 1, the air generation unit is connected to the first pipeline 100, and the air generation unit is connected to the second air storage unit through a third pipeline 300.

A communication pipeline 41 connecting the first pipeline 100 and the third pipeline 300 is further included. The communication pipeline 41 is provided with a communication valve 42. The first air storage unit 9 supplies air to the second air storage unit 20 through the first pipeline 100, the communication pipeline 41, and the third pipeline 300.

In this example, the first pipeline 100 and the third pipeline 300 are separated by the air generation unit, such as an air compressor 4. The second pipeline 200 and the third pipeline 300 are separated by the second air storage unit 20. As shown in FIG. 1, an air outlet of the air generation unit is connected to the first pipeline 100. The air generation unit can supply air to the suspension apparatus and the first air storage unit 9 through the first pipeline 100. The third pipeline 300 is configured to supply air to the second air storage unit 20, exhaust air from the suspension apparatus, and the like.

The communication pipeline 41 connects the first pipeline 100 and the third pipeline 300. This enables air exhaust of the suspension apparatus and air supply from the first air storage unit 9 to the second air storage unit 20 to bypass the air compressor 4. The communication pipeline 41 is provided with the communication valve 42. The communication valve 42 is an electrically operated valve or a pneumatic valve. The communication valve 42 controls opening and closing of the communication pipeline 41. When the first air storage unit 9 supplies air to the second air storage unit 20, the first air storage unit 9 supplies air to the second air storage unit 20 through the first pipeline 100, the communication pipeline 41 and the third pipeline 300.

In one example, the third pipeline 300 is connected to a second exhaust pipeline. The suspension apparatus exhausts air through the first pipeline 100, the communication pipeline 41, the third pipeline 300, and the second exhaust pipeline.

For example, the second exhaust pipeline is a branch connected to the third pipeline 300, and the second exhaust pipeline is provided with an air relief valve 3. The air relief valve 3 is an electrically operated valve or a pneumatic valve. Air exhaust is performed by controlling the air relief valve 3 to be opened.

In one example, the second exhaust pipeline is connected to the suspension apparatus. An exhaust port of the second exhaust pipeline is adapted to exhaust air to the outside of the vehicle cabin.

Alternatively, the second exhaust pipeline may be directly connected to the suspension apparatus. Alternatively, the second exhaust pipeline may be indirectly connected to the suspension apparatus. For example, the foregoing suspension apparatus is connected to the second exhaust pipeline through the first pipeline 100, the communication pipeline 41, and the third pipeline 300.

For example, as shown in FIG. 1, the third pipeline 300 is connected to a second exhaust pipeline. The second exhaust pipeline is provided with an air relief valve 3. The air relief valve 3 is located outside the driver's compartment. The air relief valve 3 is a solenoid valve, a pneumatic valve, or the like. The air relief valve 3 can exhaust the air exhausted from the suspension apparatus to the outside. The air exhausted from the suspension apparatus reaches the second exhaust pipeline via the first pipeline 100, the communication pipeline 41, and the third pipeline 300, and is then exhausted to the outside of the driver's compartment via the second exhaust pipeline, thereby preventing the air from causing adverse effects on an air environment of the driver's compartment.

In one example, as shown in FIG. 1, an air intake pipe is further included. The air intake pipe is used for air intake of the air generation unit. The air intake pipe is connected to the third pipeline 300. The third pipeline 300 is connected to an air inlet of an air compressor. The air intake pipe is provided with a first one-way valve 2. The first one-way valve 2 is configured to allow air to flow to the air generation unit.

For example, the air intake pipe is used for air intake of the air compressor 4. Air reaches the air compressor 4 via the air intake pipe and a part of the third pipeline 300. After being pressurized in the air compressor 4, the air is supplied to the suspension apparatus or the first air storage unit 9 via the first pipeline 100.

In another example, as shown in FIG. 2, after being pressurized in the air compressor 4, the air is supplied to the suspension apparatus or the first air storage unit 9 via the first pipeline 100, and reaches the second air storage unit 20 via the third pipeline 300.

In one example, an air inlet of the air intake pipe is located in the vehicle cabin. The vehicle cabin is, for example, a driver's compartment, or a luggage compartment.

In this example, the air compressed by the air compressor 4 enters the air compressor 4 through the air intake pipe. In this example, the air inlet of the air intake pipe is located in the vehicle cabin. Under normal circumstances, the external environment of the vehicle is complex. For example, air in the external environment has unstable quality, such as high dust content, high humidity, or high content of toxic and harmful substances. If the air inlet of the air intake pipe is disposed outside the vehicle, it may cause damage to the air compressor 4, the air spring 6, and the airbag.

However, the air in the vehicle cabin is usually filtered by an air filter of the vehicle, so that the air has stable quality and low content of harmful components. In this example, disposing the air inlet of the air intake pipe in the vehicle cabin can prevent the air compressor 4, the suspension apparatus, the airbag, and the first air storage unit 9 from being damaged by poor air quality.

The air intake pipe is provided with a filter. The filter can filter air in the vehicle cabin, thereby ensuring good quality of the air entering the air compressor 4.

As shown in FIG. 1, the air intake pipe is provided with a first one-way valve 2. Due to the arrangement of the first one-way valve 2 and the second one-way valve 1, air intake and air exhaust of the integrated adjustment system can be automatically adjusted.

In one example, as shown in FIG. 1, the third pipeline 300 is provided with a second one-way valve 1. The second one-way valve 1 is configured to allow air to flow to the second air storage unit 20.

In this example, the second one-way valve 1 allows air to enter the second air storage unit 20, but does not allow the air in the second air storage unit 20 to enter the air compressor 4, the suspension apparatus, or the first air storage unit 9. In this way, the air in the second air storage unit 20 can be effectively prevented from being exhausted with the opening of the air relief valve 3.

During air intake, the external atmospheric pressure is greater than an air pressure in the third pipeline 300. In this case, under the action of a pressure difference, the first one-way valve 2 is opened automatically, the second one-way valve 1 is in an automatically closed state due to that directionality of the second one-way valve and the pressure difference do not meet opening conditions, and air enters the air compressor 4 through the air intake pipe and the third pipeline 300. When air is supplied to the second air storage unit 20, an air pressure upstream of the second one-way valve 1 is greater than that downstream of the second one-way valve 1. Under the action of a pressure difference, the second one-way valve 1 is opened automatically, the first one-way valve 2 is in an automatically closed state due to that directionality of the first one-way valve and the pressure difference do not meet opening conditions, and the air enters the second air storage unit 20 through the third pipeline 300. This arrangement can simplify pipeline design of the air compressor 4.

In one example, as shown in FIG. 1, the suspension apparatus includes a plurality of air springs 6, and the plurality of air springs 6 are separately connected to the air supply apparatus.

The plurality of air springs 6 are distributed at different positions of the vehicle body. For example, the positions of the air springs 6 correspond to positions of wheels. This enables smoother and more uniform height adjustment of the vehicle body. Air intake, air exhaust and air pressure maintenance of each air spring 6 is controlled by an air spring solenoid valve 5. The air storage unit solenoid valve 8 is configured to control air supply, air exhaust and air pressure maintenance of the first air storage unit 9.

When the first air storage unit 9 is inflated, the air compressor 4 is turned on, the communication valve 42 and the plurality of air spring solenoid valves 5 are closed, the air storage unit solenoid valve 8 is opened, and air enters the air compressor 4 through the air intake pipe and a part of the third pipeline 300. The air compressed by the air compressor 4 is inflated into the first air storage unit 9 through the first pipeline 100.

When an air pressure in the first air storage unit 9 reaches a first specified air pressure, the air storage unit solenoid valve 8 is closed and the air compressor 4 is turned off, so that the air pressure of the first air storage unit 9 is maintained.

When the height of the vehicle body needs to be increased, the communication valve 42 is closed, the air spring solenoid valves 5 and the air storage unit solenoid valve 8 are opened, and high-pressure air in the first air storage unit 9 enters the air springs 6 through the first pipeline 100 to increase the height of the vehicle body.

When the height of the vehicle body needs to be lowered, the air storage unit solenoid valve 8 is closed, the air spring solenoid valves 5 and the communication valve 42 are opened, and air in the air springs 6 is exhausted through the first pipeline 100, the communication pipeline 41, a part of the third pipeline 300, and the second exhaust pipeline.

The plurality of air spring solenoid valves 5 and the air storage unit solenoid valve 8 form an assembly, which makes the suspension apparatus more integrated and easier to mount and dismount.

In one example, as shown in FIG. 1, the second air storage unit 20 is connected to the first air storage unit 9, and an air pressure of the second air storage unit 20 is lower than that of the first air storage unit 9.

In this example, because the air pressure of the second air storage unit 20 is lower than that of the first air storage unit 9, air can be supplied to the second air storage unit 20 from the first air storage unit 9. Compared with the manner in which the air compressor 4 supplies air to the second air storage unit 20, due to a large volume, the first air storage unit 9 can supply air to the second air storage unit 20 in time, avoiding the problem that the air compressor 4 is frequently turned on and off, and sufficient air cannot be supplied in a short time.

As shown in FIG. 1, the second air storage unit 20 is connected to the first air storage unit 9 through the third pipeline 300, the communication pipeline 41, and the first pipeline 100. This connection manner utilizes the existing pipelines, and the first air storage unit 9 can supply air to the second air storage unit 20 only by controlling the opening and closing of the valves.

In one example, as shown in FIG. 1, the first air storage unit 9 supplies air to the second air storage unit 20 through the first pipeline 100, the communication pipeline 41, and the third pipeline 300. In this example, the communication pipeline crosses the air compressor 4, to connect the first pipeline 100 and the third pipeline 300. This can prevent air from entering the air compressor 4. It should be noted that when the first air storage unit 9 supplies air to the second air storage unit 20, the air compressor stops supplying air to the first pipeline 100.

In one example, as shown in FIG. 1, the air storage unit solenoid valve 8 and the communication valve 42 are configured to be opened when an air pressure of the second air storage unit 20 is less than a specified value.

In this way, the air storage unit solenoid valve and the communication valve 42 can effectively control the first air storage unit 9 to supply air to the second air storage unit 20.

In one example, as shown in FIG. 1, the second pipeline 200 is provided with a first pressure sensor 14. The first pressure sensor 14 is configured to sense an air pressure of the second air storage unit 20.

When the air pressure of the second air storage unit 20 is less than a second specified air pressure, the air compressor 4 or the first air storage unit 9 supplies air to the second air storage unit 20.

In one example, the integrated adjustment system further includes a control apparatus. The control apparatus is configured to control inflation, air exhaust and air pressure maintenance of the suspension apparatus, the first air storage unit 9 and the seat adjustment apparatus.

For example, the control apparatus may be a controller, such as a vehicle controller, or a dedicated controller for the integrated adjustment apparatus. The controller can control the air spring solenoid valve 5, the air storage unit solenoid valve 8, the air intake solenoid valve 10, the exhaust solenoid valve 13, the communication valve 42, the air relief valve 3, and the second pressure-limiting valve 18 to be opened or closed.

In one example, the air supply apparatus is provided with a backup interface. The backup interface is configured to connect to other devices other than the first air receiving apparatus and the second air receiving apparatus. For example, the other devices may be, but are not limited to, an air dust removal device outside the vehicle, an air pump, and the like. In this example, the backup interface may supply air to other devices, thereby meeting various air use demands.

According to another embodiment of this application, an integrated adjustment system is provided. The system includes a suspension apparatus, a seat adjustment apparatus, and an air supply apparatus, wherein the air supply apparatus is connected to the suspension apparatus to supply air to the suspension apparatus, and the air supply apparatus is connected to the seat adjustment apparatus to supply air to the seat adjustment apparatus.

In this example, the air supply apparatus as previously described may be used. The seat adjustment apparatus is configured to adjust a side of a seat to adjust a posture of a passenger when the vehicle is turning, reducing passenger tilt and improving the driving experience. The suspension apparatus is configured to adjust a height of the vehicle body according to road conditions, to ensure passability of the vehicle, reduce wind resistance of the vehicle, and the like.

In this example, the seat adjustment apparatus and the suspension apparatus share one air supply apparatus, which significantly reduces the total size of the integrated adjustment system, saves an interior space of the vehicle, and reduces costs of the vehicle.

In addition, a use frequency of the suspension apparatus is much lower than that of the seat adjustment apparatus. The integrated adjustment apparatus can ensure a high use frequency of the air supply apparatus, thereby avoiding idle losses of the air supply apparatus due to long-term non-use.

In addition, the suspension apparatus usually adjusts the height of the vehicle body when the vehicle is stationary, or adjusts the height of the vehicle body along the change of a vehicle speed when the vehicle is traveling in a straight line. The seat adjustment apparatus is usually used when the vehicle is turning. Therefore, functions of the suspension apparatus and the seat adjustment apparatus do not overlap in use time, so that the air supply apparatus can be used to the maximum extent.

In addition, because work of the suspension apparatus and work of the seat adjustment apparatus are both related to a motion state of the vehicle, for the suspension apparatus and the seat adjustment apparatus, coordinated control on a plurality of functional modules (such as a plurality of solenoid valves, or pressure sensors) may be implemented through one control apparatus, so that resources of the control apparatus can be better scheduled and control strategies can be better coordinated.

In addition, for the suspension apparatus and the seat adjustment apparatus, because both apparatuses are triggered and controlled based on a position state of the vehicle and an acceleration state of the vehicle, a vehicle signal only needs to be sent once instead of a plurality of times, which saves computing resources of the control apparatus of the entire vehicle and improves operating efficiency of the system of the entire vehicle.

In addition, because two systems can be controlled by one control apparatus, for example, functions of the seat adjustment apparatus may be integrated into a control apparatus of the suspension apparatus, there is no need to equip two separate control apparatuses, which can save costs of the vehicle.

In one example, the system further includes a tire inflation apparatus. The air supply apparatus is connected to the tire inflation apparatus to supply air to the tire inflation apparatus.

The tire inflation apparatus is as previously described. For example, the air supply apparatus supplies air to the tire inflation apparatus through a fourth pipeline, or the tire inflation apparatus is connected to at least one of the first pipeline 100, the second pipeline 200, and the third pipeline 300. In this example, the suspension apparatus, the tire inflation apparatus, and the seat adjustment apparatus share one air supply apparatus, thereby reducing a size of the integrated adjustment system, saving interior space inside the vehicle, and reducing costs of the vehicle.

According to a third embodiment of this application, a vehicle is provided. The vehicle includes the foregoing integrated adjustment system.

The vehicle has the characteristic of high integration and can implement height adjustment of the vehicle body and seat adjustment.

(1) Height adjustment of the vehicle body when stationary: used to automatically adjust the height of the vehicle body according to mass of passengers in the vehicle or the vehicle, to maintain a height required for vehicle driving and the stability of a vehicle traveling state. Height adjustment of the vehicle body may be height adjustment performed on the air springs 6 corresponding to all wheels of the vehicle, or, height adjustment only performed on the air spring 6 corresponding to one wheel.

A working condition of height adjustment performed on the air springs 6 corresponding to all wheels of the vehicle is as follows: when the vehicle body needs to be lifted, the communication valve 42 is closed, four air spring solenoid valves 5, corresponding to the air springs 6, in the distribution valve 7, and the air storage unit solenoid valve 8 corresponding to the first air storage unit 9 are opened, and high-pressure air in the first air storage unit 9 enters the four air springs 6, thereby increasing the height of the vehicle body. When the vehicle body needs to be lowered, the air storage unit solenoid valve 8 is closed. The communication valve 42 is opened, and air in the air springs 6 is exhausted to the outside of the driver's compartment through the air relief valve 3.

A working condition of height adjustment performed on the air spring 6 corresponding to one wheel is as follows: the air spring solenoid valve 5 corresponding to the wheel to be lifted and the air storage unit solenoid valve 8 are opened. In this case, high-pressure air in the first air storage unit 9 enters the air spring 6 corresponding to the air spring solenoid valve 5, and the air spring 6 stretches, thereby lifting a part of the vehicle body corresponding to the wheel. When the vehicle body needs to be lowered, the air storage unit solenoid valve 8 is closed. The communication valve 42 is opened, and air in the air spring 6 is exhausted to the outside of the driver's compartment through the air spring solenoid valve 5, the communication valve 42, and the air relief valve 3.

(2) Height control of the vehicle body during traveling: used to improve directional stability of the vehicle when traveling at high speed. When the controller determines that a speed of the vehicle traveling in a straight line reaches or exceeds a specified speed, a control signal is sent to increase a damping force of an electronically controlled shock absorber. At the same time, the distribution valve 7 is controlled to exhaust air in the air spring 6 to lower the height of the vehicle body, thereby reducing wind resistance and lowering a center of gravity of the vehicle body, and improving handling stability when the vehicle is traveling at high speed. In this case, the communication valve 42 and all the air spring solenoid valves 5 are opened, and air in the air springs 6 is exhausted to the outside of the driver's compartment via the air spring solenoid valves 5, the communication valve 42, and the air relief valve 3 to decrease the height of the vehicle body.

When the speed of the vehicle traveling in the straight line drops below the specified speed, the communication valve 42 is closed, and the air storage unit solenoid valve 8 and all the air spring solenoid valves 5 are opened to re-inflate the four air springs 6 to increase the height of the vehicle body.

(3) Overload protection of the suspension apparatus: a maximum allowable air pressure of the suspension apparatus is set in the ECU. If an air pressure of the air spring 6 is greater than or equal to the maximum allowable air pressure, the air spring 6 is deflated and the height of the vehicle body is decreased. In this case, the communication valve 42 and all the air spring solenoid valves 5 are opened, and air in the air springs 6 is exhausted to the outside of the driver's compartment through the air spring solenoid valves 5, the communication valve 42, and the air relief valve 3 to decrease the height of the vehicle body.

If the vehicle needs to resume the normal state, for example, the air pressure of the air spring 6 is greater than the maximum allowable air pressure, it is necessary to reduce a load of the vehicle, such as unloading overloaded cargoes. When the air pressure of the air spring 6 is lower than the maximum allowable air pressure, the vehicle is restarted and then the vehicle resumes the normal state.

(4) Steering support of sides of the seat: used to improve lateral stability of the passenger relative to the seat when the vehicle body is subjected to a lateral force. When the vehicle is turning, for example, when at least one of lateral acceleration, a roll angle, and roll angular velocity is greater than or equal to a specified value, the driver's seat control valve 15 and the corresponding air intake solenoid valve 10 are opened, and the exhaust solenoid valve 13 is closed. High-pressure air in the second air storage unit 20 enters the airbag, such as a left side airbag 12, via the first pressure-limiting valve 19, the driver's seat control valve 15, and the corresponding air intake solenoid valve 10, to support the waist of the passenger and prevent the passenger from tilting. When at least one of the lateral acceleration, roll angle, or roll angular velocity of the vehicle is less than the specified value, the air intake solenoid valve 10 is closed and the exhaust solenoid valve 13 is opened, and air in the airbag (such as the left side airbag 12) is exhausted to the outside of the driver's compartment, and the left side of the seat no longer plays a role in supporting.

It should be noted that in each of the foregoing use modes, the opening and closing of different valves are controlled by the controller. When the suspension apparatus is working, the first air storage unit 9 only supplies air to the suspension apparatus and stops supplying air to the seat adjustment apparatus. When the seat adjustment apparatus is working, the second air storage unit 20 only supplies air to the seat adjustment apparatus, and the first air storage unit 9 or the air compressor 4 stops supplying air to the second air storage unit 20.

According to a fourth embodiment of this application, a vehicle is provided. The vehicle includes the foregoing integrated adjustment system. The second pipeline 200 is provided with a first pressure-limiting valve 19. The seat adjustment apparatus includes an airbag. The airbag is located at a side rear position of the seat. The airbag is connected to the second pipeline 200. The second pipeline 200 is provided with a first valve and a second valve. The first valve can control air intake of the airbag. The second valve is configured to control air exhaust of the airbag.

The first pressure-limiting valve 19 and the first valve are configured to be opened upon obtaining a signal that the vehicle is turning, to inflate the airbag at the side rear position on a tilted side.

In this example, the first valve is an air intake solenoid valve 10, and the second valve is an exhaust solenoid valve 13. When the vehicle turns right, the passenger body tilts to the left. After obtaining a signal of turning to the right, a controller sends out a control signal, so that the driver's seat control valve 15 and the corresponding air intake solenoid valve 10 are opened, and the exhaust solenoid valve 13 is closed. High-pressure air in the second air storage unit 20 enters the airbag, such as the left side airbag 12, via the first pressure-limiting valve 19, the driver's seat control valve 15, and the corresponding air intake solenoid valve 10, to support the waist of the passenger and prevent the passenger from tilting. In one example, the second valve is configured to be opened upon receiving a signal that the vehicle is no longer turning. For example, when obtaining a signal that the vehicle travels straight or the vehicle stops, the controller sends out a control signal, to open the exhaust solenoid valve 13, air in the left side airbag 12 is exhausted, and the left side resumes an initial state.

The signal includes at least one of lateral acceleration, a roll angle, or roll angular velocity. The foregoing signals enable the controller to accurately determine the state of the vehicle and precisely control the operation of the integrated adjustment system.

In the description of this specification, descriptions referring to the terms "one embodiment", "some embodiments", "examples", "specific examples" or "some examples" mean that specific features, structures, materials or characteristics described in connection with this embodiment or example are included in at least one embodiment or example of this application. In this specification, the schematic representations of the foregoing terms are not necessarily referring to the same embodiment or example. Moreover, specific features, structures, materials or characteristics described may be combined in any one or more embodiments or examples in a suitable manner. In addition, those skilled in the art may combine and associate different embodiments or examples and features of different embodiments or examples described in this specification without mutual contradiction.

Although embodiments of this application have been shown and described above, it is understood that the foregoing embodiments are exemplary and are not to be construed as limitations on this application. Those of ordinary skill in the art may change, modify, replace and vary the foregoing embodiments within the scope of this application.

## Claims

1. An integrated adjustment system, applied to a vehicle, wherein the integrated adjustment system comprises:
a first air receiving apparatus and a second air receiving apparatus, the first air receiving apparatus being configured to implement a first function, the second air receiving apparatus being configured to implement a second function, and the first function being different from the second function; and
an air supply apparatus, the air supply apparatus being connected to the first air receiving apparatus to supply air to the first air receiving apparatus, and the air supply apparatus being connected to the second air receiving apparatus to supply air to the second air receiving apparatus.

2. The integrated adjustment system according to claim 1, wherein the integrated adjustment system further comprises a third air receiving apparatus, the air supply apparatus is connected to the third air receiving apparatus to supply air to the third air receiving apparatus, the third air receiving apparatus is configured to implement a third function, and the third function is different from the first function and the second function.

3. The integrated adjustment system according to claim 2, wherein the first air receiving apparatus, the second air receiving apparatus and/or the third air receiving apparatus are components of a vehicle.

4. The integrated adjustment system according to claim 2 or 3, wherein the first air receiving apparatus is one or more of a suspension apparatus, a seat adjustment apparatus, and a tire inflation apparatus;
the second air receiving apparatus is one or more of a suspension apparatus, a seat adjustment apparatus, and a tire inflation apparatus; and
the third air receiving apparatus is one or more of a suspension apparatus, a seat adjustment apparatus, and a tire inflation apparatus.

5. The integrated adjustment system according to any one of claims 2 to 4, wherein in a first state, the air supply apparatus is configured to supply air to the first air receiving apparatus;
in a second state, the air supply apparatus is configured to supply air to the second air receiving apparatus;
in a third state, the air supply apparatus is configured to supply air to the third air receiving apparatus;
in a fourth state, the air supply apparatus is configured to supply air to the first air receiving apparatus and the second air receiving apparatus;
in a fifth state, the air supply apparatus is configured to supply air to the third air receiving apparatus and the second air receiving apparatus;
in a sixth state, the air supply apparatus is configured to supply air to the third air receiving apparatus and the first air receiving apparatus; or
in a seventh state, the air supply apparatus is configured to supply air to the first air receiving apparatus, the second air receiving apparatus, and the third air receiving apparatus.

6. The integrated adjustment system according to any one of claims 1 to 5, wherein the air supply apparatus comprises an air generation unit and a first air storage unit, the air generation unit is configured to supply air to the first air storage unit, so that the first air storage unit supplies air to the first air receiving apparatus and/or the second air receiving apparatus.

7. The integrated adjustment system according to any one of claims 1 to 5, wherein the air supply apparatus comprises an air generation unit, a first air storage unit, and a second air storage unit, the air generation unit is configured to supply air to the first air storage unit, and the air generation unit or the first air storage unit is configured to supply air to the second air storage unit.

8. The integrated adjustment system according to claim 7, wherein the first air receiving apparatus is a suspension apparatus, the second air receiving apparatus is a seat adjustment apparatus, the air supply apparatus supplies air to the first air receiving apparatus through a first pipeline, the air supply apparatus supplies air to the second air receiving apparatus through a second pipeline, and a distribution valve is disposed between the first air storage unit and the suspension apparatus.

9. The integrated adjustment system according to claim 8, wherein a pressure-limiting valve set is disposed between the second air storage unit and the seat adjustment apparatus.

10. The integrated adjustment system according to claim 9, wherein the pressure-limiting valve set comprises a first pressure-limiting valve and a second pressure-limiting valve, the first pressure-limiting valve is disposed on the second pipeline, the second pipeline comprises an exhaust branch, and the second pressure-limiting valve is disposed on the exhaust branch.

11. The integrated adjustment system according to any one of claims 8 to 10, wherein the second pipeline is provided with an air pressure adjustment valve set, and the air pressure adjustment valve set is configured to adjust an air pressure of the seat adjustment apparatus.

12. The integrated adjustment system according to claim 11, wherein the air pressure adjustment valve set comprises a first valve and a second valve, the first valve has a first end, a second end, and a third end, the first end is connected to the air supply apparatus, the second end is connected to the seat adjustment apparatus, the third end is connected to a first exhaust pipeline, the second valve is disposed on the first exhaust pipeline to control the first exhaust pipeline to be opened or closed, and the first end, the second end, and the third end are in selective communication in pairs.

13. The integrated adjustment system according to any one of claims 8 to 12, wherein the air generation unit is connected to the first pipeline, and the air generation unit is connected to the second air storage unit through a third pipeline; and
further comprising a communication pipeline connecting the first pipeline and the third pipeline, the communication pipeline is provided with a communication valve, and the first air storage unit supplies air to the second air storage unit through the first pipeline, the communication pipeline, and the third pipeline.

14. The integrated adjustment system according to claim 13, wherein the third pipeline is connected to a second exhaust pipeline, and the suspension apparatus exhausts air through the first pipeline, the communication pipeline, the third pipeline and the second exhaust pipeline.

15. The integrated adjustment system according to claim 14, wherein the integrated adjustment system further comprises the second exhaust pipeline, the second exhaust pipeline is connected to the suspension apparatus, and an exhaust port of the second exhaust pipeline is adapted to exhaust air to the outside of a vehicle cabin.

16. The integrated adjustment system according to any one of claims 13 to 15, wherein the third pipeline is provided with a second one-way valve, and the second one-way valve is configured to allow air to flow to the second air storage unit.

17. The integrated adjustment system according to claim 16, wherein the integrated adjustment system further comprises an air intake pipe, the air intake pipe is used for air intake of the air generation unit, the air intake pipe is connected to the third pipeline, the air intake pipe is provided with a first one-way valve, and the first one-way valve is configured to allow air to flow to the air generation unit.

18. The integrated adjustment system according to claim 17, wherein an air inlet of the air intake pipe is adapted to draw air from the vehicle cabin.

19. The integrated adjustment system according to any one of claims 8 to 18, wherein the suspension apparatus comprises a plurality of air springs, and the plurality of air springs are separately connected to the air supply apparatus.

20. The integrated adjustment system according to any one of claims 8 to 19, wherein the second air storage unit is connected to the first air storage unit, and an air pressure of the second air storage unit is less than that of the first air storage unit.

21. The integrated adjustment system according to any one of claims 13 to 18, wherein the first air storage unit supplies air to the second air storage unit through the first pipeline, the communication pipeline, and the third pipeline.

22. The integrated adjustment system according to any one of claims 13 to 18, wherein the first pipeline is provided with an air storage unit solenoid valve, and the air storage unit solenoid valve and the communication valve are configured to be opened when an air pressure of the second air storage unit is less than a specified value.

23. The integrated adjustment system according to any one of claims 1 to 22, wherein the air supply apparatus is provided with a backup interface.

24. An integrated adjustment system, wherein the integrated adjustment system comprises a suspension apparatus, a seat adjustment apparatus, and an air supply apparatus, the air supply apparatus is connected to the suspension apparatus to supply air to the suspension apparatus, and the air supply apparatus is connected to the seat adjustment apparatus to supply air to the seat adjustment apparatus.

25. The integrated adjustment system according to claim 24, further comprising a tire inflation apparatus, the air supply apparatus being connected to the tire inflation apparatus to supply air to the tire inflation apparatus.

26. A vehicle, wherein the vehicle comprises the integrated adjustment system according to any one of claims 1 to 23.

27. A vehicle, wherein the vehicle comprises the integrated adjustment system according to claim 8, the second pipeline is provided with a first pressure-limiting valve, the seat adjustment apparatus comprises an airbag, the airbag is located at a side rear position of the seat, the airbag is connected to the second pipeline, the second pipeline is provided with a first valve and a second valve, the first valve is configured to control air intake of the airbag, and the second valve is configured to control air exhaust of the airbag; and
the first pressure-limiting valve and the first valve are configured to be opened upon obtaining a signal that the vehicle is turning, to inflate the airbag at the side rear position on a tilted side.

28. The vehicle according to claim 27, wherein the second valve is configured to be opened upon receiving a signal that the vehicle is no longer turning.

29. The vehicle according to claim 27 or 28, wherein the signal comprises at least one of lateral acceleration, a roll angle, or roll angular velocity.

30. The vehicle according to claim 27 or 28, wherein the airbag comprises a left side airbag corresponding to a position of a left side of the seat and a right side airbag corresponding to a position of a right side of the seat.
